# EUROPEAN PATENT APPLICATION

(11) **EP 2 546 682 A2**
(43) Date of publication of application: **16.01.2013**
(21) Application number: 12004771.7
(22) Date of filing: 26.06.2012
(51) Int. Cl.: G02B 1/11, G02B 1/10

(54) **Optical element, method for manufacturing the same, and light-shielding coating material for the same**

(30) Priority: 15.07.2011 JP 2011156786
(71) Applicant: Canon Kabushiki Kaisha, Ohta-ku Tokyo (JP)
(72) Inventor: Ogawa, Ryo - Engineer, Tokyo (JP); Tsubaki, Keiichiro - Engineer, Tokyo (JP); Hino, Tetsuo - Engineer, Tokyo (JP); Sano, Daisuke - Engineer, Tokyo (JP)
(74) Representative: Weser, Thilo

(57) **Abstract**

An optical element includes a base member having an optically ineffective portion and a light-shielding film disposed on the optically ineffective portion. The light-shielding film contains a cured mixture of an epoxy resin and a phenol resin.

## Description

### BACKGROUND OF THE INVENTION

### Field of the Invention

The present invention relates to an optical element, a method for manufacturing the optical element, and a light-shielding coating material for the optical element.

### Description of the Related Art

In order to achieve a high-definition, high-performance optical system, various approaches to reducing the generation of harmful light that causes flaring and ghosts have been made for lenses and other optical elements. These approaches are classified into the following two:
(1) approaches to increasing the optical transmittance of an optically effective portion to reduce reflection; and
(2) approaches to increasing the optical absorptance of an optically ineffective portion to reduce reflection.
In the description herein, an optically effective portion refers to the portion of an optical element through which light passes, and an optically ineffective portion refers to the portion of the optical element through which light cannot pass. When a plurality of lenses are combined, for example, for a camera, or are incorporated in a lens tube, some part of the optically effective portions of the lenses may not transmit light and thus may act as an optically ineffective portion, depending on the sizes or relative positions of the lenses.

In case (1), such an optically effective portion is generally provided with a dielectric thin film by vacuum evaporation, sputtering, or the like.

Also, an antireflection structure using a sub-wavelength structure (SWS) having a period or a pitch smaller than or equal to the operating wavelength is known as an alternative to the dielectric thin film.

Japanese Patent Laid-Open No. 2006-053220 discloses a structure including an antireflection portion on a curved surface of a member, the antireflection portion having a periodic fine relief structure with a pitch smaller than or equal to the operating wavelength of light whose reflection should be prevented. This antireflection structure can achieve antireflection characteristics superior in wavelength band and incidence angle to an antireflection structure using a dielectric thin film.

In case (2), the edge or other optically ineffective portions of a lens are generally provided with a light-shielding film to reduce internal reflection. For forming the light-shielding film, in general, a coating material for preventing internal reflection is used which is prepared by mixing a resin component and a material that easily absorbs light, such as coal tar, coal tar pitch, or black dye. In Japanese Patent Publication No. 47-32418, internal reflection is reduced by combining several types of dyes including a black dye, a pitch, carbon black, and an epoxy resin.

In many cases other than the case disclosed in this patent document, epoxy resins and modified epoxy resins are used as the resin component of light-shielding coating materials. This is because epoxy-based resins can form strong cured materials superior in weather resistance in combination with a curing agent suitable for the use. Epoxy-based resins can be advantageously used particularly for forming a coating film required to be durable for a long time. In general, an epoxy resin or a mixture of an epoxy resin and an additive for imparting a function to the epoxy resin is referred to as a base resin, and a curing agent, if used, is a counter material. For many of the commercially available epoxy resins, their manufacturers specify the combination of the base resin and the curing agent.

Nowadays, however, in order to enhance the performance of an optical element, both approaches are taken in some cases. That is, a light-shielding coating material is applied to the edge of a lens and, then, an antireflection film for enhancing the transmittance and reducing reflection is formed on the optically effective portion of the lens.

Unfortunately, for example, when an antireflection coating material is applied to an optically effective portion by spin coating or other liquid-phase processes, the antireflection coating material spreads undesirably to part of the edge of the lens. Consequently, the resulting antireflection film covers not only the optically effective portion, but also part of the light-shielding film formed on the optically ineffective portion so as to spread to the surface of the light-shielding film in a radial manner.

In this instance, if the resulting optical element is subjected to an accelerated deterioration test using ultraviolet (UV) light, color unevenness may occur in the light-shielding film, corresponding to the shape of the antireflection film radially spread to the light-shielding film.

### SUMMARY OF THE INVENTION

The present invention provides an optical element including a light-shielding film improved in flexibility and weather resistance, a method for manufacturing the optical element, and a light-shielding coating material used for the optical element.

The present invention in its first aspect provides an optical element as specified in claims 1 to 9.

The present invention in its second aspect provides a method for manufacturing an optical element as specified in claims 11 and 12.

The present invention in its second aspect provides a light-shielding coating material as specified in claims 13 and 15.

In the embodiments of the invention, the light-shielding film of the optical element, which contains a phenol resin, exhibits enhanced flexibility and weather resistance, and can prevent effectively color unevenness and other phenomena that may affect the function and appearance of the light-shielding film.

Further features of the present invention will become apparent from the following description of exemplary embodiments with reference to the attached drawings.

### BRIEF DESCRIPTION OF THE DRAWINGS

Fig. 1 shows an optical element according to an embodiment of the invention.

Fig. 2 shows radical trapping reactions of a phenolic hydroxy group in an embodiment of the present invention.

Figs. 3A to 3E show the method used in Example 1.

Fig. 4 shows the optically effective portion of an optical element according to an embodiment of the invention.

Fig. 5 shows an electron micrograph of a fine relief structure of an optical element according to an embodiment of the invention.

### DESCRIPTION OF THE EMBODIMENTS

Embodiments of the invention will now be described.

In the present embodiment, an optical element will be described which includes a base member having an optically effective portion and an optically ineffective portion, and a film that is disposed on the entire or part of the optically ineffective portion and does not transmit light having an wavelength that will be used in the optical element (hereinafter referred to as operating wavelength). The film that does not transmit light having such an operating wavelength is formed by applying a coating material for preventing internal reflection containing a light-absorbing material, an epoxy resin and a phenol resin to the optically ineffective portion of the base member by an arbitrary method, and curing the coating material under specific conditions. This film that does not transmit light having the operating wavelength is referred to as a light-shielding film in the description herein. Also, the coating material for preventing internal reflection is referred to as a light-shielding coating material.

The light-shielding coating material of the present embodiment will first be described. The light-shielding coating material contains a light-absorbing material, an epoxy resin and a phenol resin. The phenol resin is added to a mixture of the light-absorbing material and the epoxy resin. In the description herein, the mixture of the light-absorbing material and the epoxy resin is referred to as base material. The base material contains, but is not limited to, 10% to 20% by weight of an epoxy resin, 25% to 35% by weight of a black dye or any other light-absorbing material, 15% to 25% by weight of filler or any other auxiliary material, and the balance of an organic solvent.

Various types of phenol resin for general industrial use can be added to the base material. Among those, thermally curable resol resins are more suitable. Liquid resol resins, which are advantageous in handling, are easily available. Also, a water-resistant resol resin compatible with the epoxy resin used in the base material may be advantageously used. The glass transition temperature (Tg) of the phenol resin is preferably 200°C or less, and more preferably 120°C or less, when the phenol resin is cured independently. From the viewpoint of mixing with the base material, the phenol resin is desirably liquid at room temperature, and the viscosity of the phenol resin may be adjusted by adding a solvent or the like. Commercially available phenol resins include SHONOL (registered trademark) produced by Showa Denko, SUMILITERESIN (registered trademark) produced by Sumitomo Bakelite, and phenol resins produced by DIC.

The phenol resin can impart a flexibility and an ability to trap radicals to the light-shielding coating material. However, an excessive content of the phenol resin adversely affects the optical characteristics of the light-shielding film. Accordingly, the phenol resin content is preferably 10 to 2,000 parts by weight, more preferably 50 to 1,000 parts by weight, relative to 100 parts by weight of epoxy resin in the base material.

A radical scavenger may be added. Known radical scavengers can be used. For example, (1) an amine or (2) a phenol may be used as the radical scavenger. (1) Amine radical scavengers include N,N'-diphenyl-p-phenylenediamine and phenyl-4-piperidinyl carbonate. (2) Phenol scavengers include 2,6-di-tert-butyl-4-methylphenol (BHT), butylated hydroxyanisole (BHA), 3,5-di-tert-butylhydroxytoluene, and 2,5-di-tert-butylhydroquinone, and one or more of these are used. Among these, (2) phenol radical scavengers are more suitably used, such as 2,6-di-tert-butyl-4-methylphenol (BHT) and butylated hydroxyanisole (BHA).

Furthermore, a curing agent may be added. The curing agent may be derived from an acid anhydride or an amine. However, amine-based curing agents are liable to promote a cross-linking reaction when the coating material is cured. Thus, the use of an amine-based curing agent makes it difficult to form a flexible light-shielding film. Accordingly, an acid anhydride-based curing agent may be suitable. From the viewpoint of enhancing the weather resistance of the light-shielding film, an alicyclic acid anhydride may be used as the acid anhydride-based curing agent.

Various types of alicyclic acid anhydride can be used, including phthalic anhydride derivatives, such as tetrahydrophthalic anhydride and hexahydrophthalic anhydride. Phthalic anhydride derivatives may be solid or liquid at room temperature. From the viewpoint of easy mixing with the base material, a phthalic anhydride derivative that is liquid at room temperature is suitable. Examples of such a phthalic anhydride include methylhexahydrophthalic anhydride (commercially available as, for example, RIKACID MH-700 and RIKACID HNA-100 from New Japan Chemical, EPICLON B-650 from DIC Corporation, and HN-5500 from Hitachi Chemical) and methyl endomethylenetetrahydrophthalic anhydride (MHAC-P available from Hitachi Chemical).

In the present embodiment, the concentration or viscosity of the coating material may be adjusted to control the thickness of the light-shielding film and to enhance the workability in applying the coating material. This can be achieved by adding an organic solvent, an epoxy resin or a phenol resin.

A curing accelerator may also be added to the light-shielding coating material.

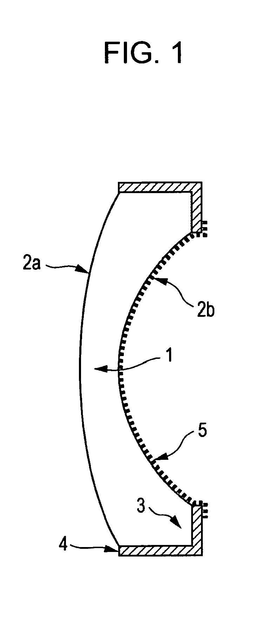

An optical element according to an embodiment of the invention will now be described with reference to Fig. 1. The optical element includes a base member having an optically effective portion and an optically ineffective portion, and a light-shielding film disposed on the entire or part of the optically ineffective portion. In Fig. 1, reference numeral 1 designates the base member; reference numerals 2a and 2b designate the surfaces defining the optically effective portion through which light passes; and reference numeral 3 designates the optically ineffective portion through which light cannot pass. When the base member is a lens, the edge of the lens is the optically ineffective portion. Reference numeral 4 designates the light-shielding film. Reference numeral 5 designates an antireflection film or another film having an optical function. This optically functional film is disposed on the optically effective portion and extends so as to overlap the light-shielding film 4. In the optical element of the present embodiment, the light-shielding film is disposed on the entire or part of the optically ineffective portion 3. The light-shielding film contains a cured mixture of an epoxy resin and a phenol resin. In other words, the optical element of the present embodiment has a light-shielding film formed on the entire or part of the optically ineffective portion by curing the light-shielding coating material of an embodiment of the invention. In particular, since resol resins are thermosetting resins having high moisture penetration resistance and water repellency and are easy to handle, a resol resin is desirably selected from among phenol resins.

Also, the cured mixture may contain an alicyclic acid anhydride as a curing agent. A cured mixture containing an alicyclic acid anhydride exhibits a high heat resistance and does not reduce its weight even at high temperatures at which weight reduction will occur. In addition, alicyclic acid anhydrides are superior in flexibility and can enhance the adhesion with the base member.

The optically ineffective portion 3 may be subjected to surface treatment so that, for example, the light-shielding coating material can be reliably fixed to the optically ineffective portion.

The light-shielding coating material may be applied by various methods without particular limitation, such as brushing, spin coating, spray coating and dip coating, depending on, for example, the shape of the base member or the position of the optically ineffective portion.

The light-shielding coating material can be cured by a thermal process, but other techniques may be applied as long as the coating material can be cured into the same cured mixture as produced in the thermal process. If a thermal process is applied, the heating conditions are set according to the types of the curing agent and curing accelerator and the heat resistance of the base member. For a light-shielding coating material mainly containing the above-described base material and a phenol resin, the thermal process can be performed at a temperature of 100 to 250°C, preferably 120 to 220°C. The heating time is preferably 30 minutes to 20 hours, and more preferably 1 to 4 hours.

The light-shielding film 4 may be covered with another film (protective film) to enhance the abrasion resistance of the surface, the smoothness in appearance, and the water-repellency. This protective film may be made of a phenol resin, such as SHONOL (registered trademark) produce by Showa Denko or SUMILITERESIN (registered trademark) produced by Sumitomo Bakelite, or silicone resin. In particular, since resol resins are thermosetting resins having high moisture penetration resistance and water repellency and are easy to handle, a resol resin is desirably selected from among phenol resins. By providing the light-shielding film with such a protective film on the surface thereof, moisture penetration resistance and water repellency can be enhanced.

After the light-shielding film 4 has been formed on the optically ineffective portion 3, a film having an optical function, such as an antireflection film, may be formed on the optically effective portion by a desired method. The light-shielding film of the present embodiment is suitable for the case where the optically functional film is formed in a liquid-phase process or other processes performed at a high temperature by, for example, heating in the air, or performed in a high-humidity environment by, for example, immersing in hot water.

If an antireflection film is formed on a surface of the base member 1 by a liquid-phase process, a coating material for forming an antireflection film is applied onto at least one surface 2b of the optically effective portion. This coating material may contain an inorganic material such as zinc, aluminum, silicon or titanium, an oxide of these inorganic materials, a metal fluoride such as magnesium fluoride, or a resin. The application of the coating material for the antireflection film can be performed by various methods, such as spin coating, spray coating, and dip coating. The coating material for the antireflection film may be unevenly applied to part of the light-shielding film 4. In order for the film of this coating material to function as an antireflection film, the refractive index of the film may be adjusted, or a relief structure may be formed in the film.

For forming a film having an adjusted refractive index, fine particles of a material having a low refractive index, such as magnesium fluoride, may be applied, or hollow particles of silicon oxide may be applied.

If an antireflection film having a relief structure is formed, the antireflection film includes a nano-structure of a material, and the apparent refractive index of the nano-structure is lower than the intrinsic refractive index of the material and varies in the thickness direction of the film.

More specifically, the nano-structure is defined by a fine structure having a pitch or period smaller than the operating wavelength of the optical element using the antireflection film. This fine structure has cavities open or closed to the external atmosphere. The refractive index of the material (intrinsic refractive index) of the antireflection film and the refractive index of the medium such as air filling the cavities are equalized. Consequently, the apparent refractive index of the antireflection film becomes lower than the intrinsic refractive index of the material of the antireflection film. In other words, the intrinsic refractive index of a material refers to the refractive index of the material in a non-porous thin film or in the bulk state, and the apparent refractive index refers to the refractive index of a film of the material having a nano-structure. The apparent refractive index can be controlled by varying the occupancy of the cavities or the solid portion in the film.

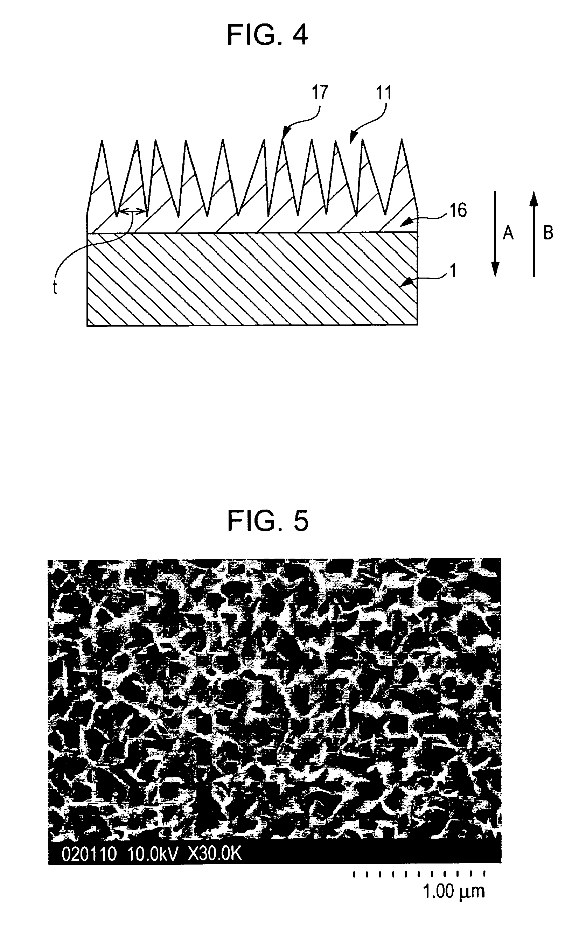

Fig. 4 is a schematic sectional view of the antireflection film used in an embodiment of the invention. The antireflection film has a solid portion (protrusions) 17 and cavities 11. If light passes in the direction of arrow A, the apparent refractive index can be intermittently or continuously increased in the direction in which light comes and goes. If light passes in the direction of arrow B, the apparent refractive index can be intermittently or continuously reduced in the direction in which light comes and goes. It is desirable that the topmost surface of the antireflection film, which comes in contact with the external atmosphere, has a refractive index close to 1, and that the refractive index becomes gradually closer to the intrinsic refractive index of the material of the antireflection film (for example, 1.4 to 3.0) in the direction in which the depth of the antireflection film is increased (becomes closer to the surface 16 of the base member).

Alternatively, the fine structure may be defined by a stack of layers having different occupancies of the cavities or solid portion, or a structure in which the cavities or solid portion has an occupancy distribution. In the embodiment shown in Fig. 4, the cavities communicate with the external atmosphere at the topmost surface of the antireflection film, and thus the antireflection film has an unsmooth fine relief structure. The thickness (t) of the protrusions is smaller than the operating wavelength, and more specifically the thickness is on the order of nanometers.

Such a fine relief structure is expressed by words such as moth-eye, sub-wavelength structure (SWS), sponge-like, petaline, woven cloth-like, spinous, and hair-like (see Figs. 4 and 5, and Japanese Patent Laid-Open Nos. 09-202649, 2005-275372 and 2006-259711). Fig. 5 is an electron micrograph of the fine relief structure of an optical element according to an embodiment of the invention.

The solid portion of the fine relief structure may be made of metal oxides, such as silicon oxide, zinc oxide, titanium oxide, magnesium oxide, zirconium oxide, and aluminum oxide, or other metal compounds such as magnesium fluoride and other metal fluorides, metal fluoride oxides, and metal hydroxides. The material of the solid portion may contain these metal compounds as a component. The metal element of the metal compound is not limited to one, and the metal compound may contain a plurality of metal elements, like a binary or ternary metal compound. The solid portion may contain phosphorus, boron or the like.

The solid portion may be, but is not limited to, amorphous, microcrystalline, polycrystalline or monocrystalline, or may be defined by a mixture of amorphous portions and crystalline portions.

For forming the antireflection film, a solid film formed by a gas-phase process, such as vacuum evaporation, sputtering, or CVD, or a liquid-phase process, such as sol-gel method, coating, or spraying, is subjected to surface treatment using heat or hot water to form a relief structure having fine protrusions on the surface of the solid film.

For example, boehmite, or plate crystals of aluminum oxide, aluminum hydroxide or hydrates thereof, is grown by immersing an amorphous aluminum oxide film, which is formed on the surface 16 of a base member 1 by a sol-gel method, in hot water, and thus a fine petaline relief structure is formed. More specifically, the coating material for the antireflection film is applied on the surface of the base member 1, and the coating is heated to form a film fixed to the surface of the base member 1. Then, the resulting film is immersed in hot water or exposed to steam. The heating of the coating is performed at a temperature of 100 to 220°C for 5 minutes to 24 hours. Preferably, the heating temperature is 60 to 100°C and the time of contact with hot water is 5 minutes to 24 hours. By immersing the coating film in hot water or exposing the coating film to steam to bring the film into contact with hot water or steam, the aluminum component in the film reacts to dissolve or precipitate. Consequently, a relief structure made of crystals mainly of aluminum oxide, aluminum hydroxide, or hydrates thereof is formed at the surface of the antireflection film. The crystals are plate-like and can be boehmite. The ends of these crystals define fine unevenness. In order to increase the height of this relief structure and to reduce the pitch of the structure, the plate crystals are arranged with a specific angle with the surface of the base member. Since the refractive index of this relief structure is continuously increased toward the base member from the interface with air, a very high ability to prevent reflection can be achieved.

An intermediate layer may be formed between the antireflection film and the base member 1. The intermediate layer can be a solid film having a refractive index between the apparent refractive index of the antireflection film and the refractive index of the base member. More specifically, the intermediate layer may be formed of inorganic materials including metal compounds cited as the material of the antireflection film, or organic compounds including resins such as polyimide.

The material of the base member may be glass, resin, glass mirror or resin mirror. Typical examples of a resin base member include films and moldings made of thermoplastic resins, such as polyester, triacetyl cellulose, cellulose acetate, polyethylene terephthalate, polypropylene, polystyrene, polycarbonate, polymethyl methacrylate, ABS resin, polyphenylene oxide, polyurethane, polyethylene, and polyvinyl chloride. Cross-linked films or moldings may be used which are produced from thermosetting resins such as unsaturated polyester resins, phenol resins, cross-linked polyurethane, cross-linked acrylic resins, and cross-linked saturated polyester resins. The glass may be non alkali glass or alumina silica glass. The material of the base member may be a flat plate, a film or a sheet, and may be in any form as long as it can be formed into a desired shape according to the use. The base member may have a two-dimensionally or three-dimensionally curved surface. The thickness of the base member can be determined as needed, and is typically, but is not limited to, 5 mm or less.

A base member having a high Young's modulus can produce a noticeable effect in embodiments of the invention. The use of a base member having a Young's modulus in the range of 90 to 130 GPa is effective. The reason is as below.

With the advance of optical design technology and the improvement of the base member in refractive index, the composition of the base member has been changed, and a base member having a higher hardness than ever is used in some cases. For example, a lanthanum-based glass material is used for a high-refractive-index, high-dispersion base member. In general lanthanum-based glass materials have high glass transition temperatures (Tg) and also have high Young's moduli and high hardnesses. When such a base member is provided with a light-shielding film and, then, an antireflection film is formed on the base member by a liquid-phase process, such as spin coating, the coating material for the antireflection film may spread unevenly to the upper surface of the light-shielding film, and consequently, the resulting antireflection film may lie unevenly on the upper surface of the light-shielding film.

At this time, the light-shielding film on the base member unevenly includes portions in different two states: (1) portions lying between the hard base member and the antireflection film; and (2) portions in close contact with the hard base member without being covered with the antireflection film (or with the antireflection film uneven in thickness or structure overlying the portions).

If such a nonuniform light-shielding film undergoes temperature or humidity changes in an operation for forming the antireflection film, portions (1) of the light-shielding film, which lie between the hard base member and the antireflection film, are inhibited from expanding. In contrast, portions (2), which have surfaces not restrained by the antireflection film, are likely to expand. Consequently, a load is placed on the light-shielding film due to the large difference in expansion between portions (1) and (2), and thus causes a strain in the light-shielding film. In particular, a hard material, such as a lanthanum-based glass material, makes the difference between portions (1) and (2) noticeable, and consequently, the strain is increased. If strains occur unevenly, nonuniform deterioration in brittleness and color may occur in the light-shielding film with temperature or humidity changes in the process step of forming the antireflection film. However, the appearance is generally not affected by such nonuniform deterioration at this stage.

If the optical element is placed in an environment in which the optical element is exposed to a large amount of UV light (for example, when subjected to accelerated deterioration test with UV light), however, the deterioration of the light-shielding film is accelerated by the UV light. Then, the nonuniform deterioration is made apparent by the degradation of the light-shielding film in optical properties and by the progress of cross-linking reaction with UV light. Consequently, poor appearance, such as color unevenness of the light-shielding film, may be optically (visibly) observed.

In the present embodiment, the light-shielding film is formed by curing a mixture prepared by adding a phenol resin to a base material containing an epoxy resin, a black dye and other additives. Probably, the phenol resin imparts a flexibility and an ability to trap radicals to the light-shielding film, and thus prevents phenomena, such as nonuniform deterioration, that may affect the function and appearance of the light-shielding film.

For forming the light-shielding film, by adding a phenol resin to a base material containing an epoxy resin, a black dye and other additives, the flexibility of the cured mixture is increased, so that the load placed on the light-shielding film is reduced. Consequently, the strain is removed and is not left in the light-shielding film. By reducing such a residual stain, nonuniform deterioration can be reduced effectively which is caused by temperature and humidity changes in the process step of forming an antireflection film.

Also, it has been widely known that in an environment in which the optical element is exposed to a large amount of UV light (for example, when subjected to accelerated deterioration test), radicals are generated by the UV light and cause a cross-linking reaction or oxidation, and that this causes deterioration of the materials, such as embrittlement and decomposition. In the light-shielding film, for example, if the weather resistance of the material is degraded, a slight nonuniform deterioration that has occurred in the process step of forming the antireflection film may be brought to the surface as color unevenness by getting together with deterioration phenomena resulting from the degradation of the weather resistance, such as uneven density and reduction in opacity.

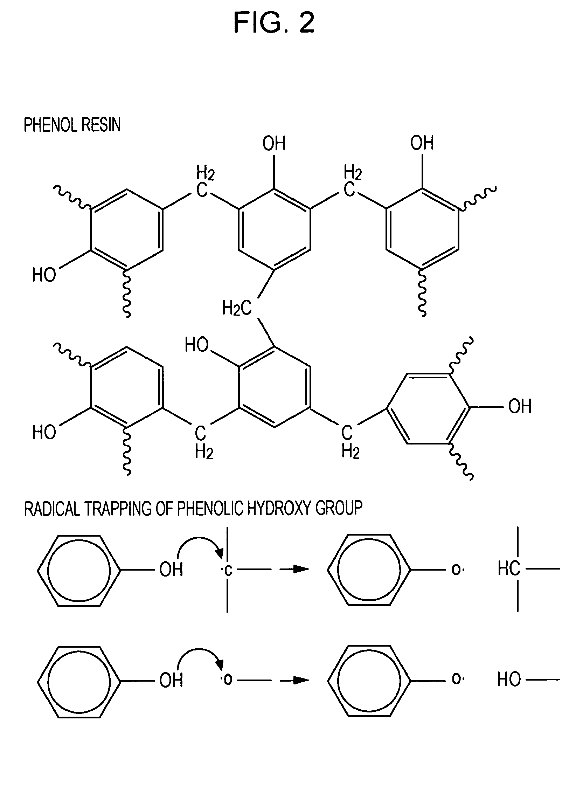

The phenol resin has a phenolic hydroxy group. Since the hydrogen of the phenolic hydroxy group is easily abstracted by radicals, the phenolic hydroxy group has an ability to trap radicals. Since the attack from radicals on the light-shielding film is alleviated by trapping the radicals generated in an environment exposed to a large amount of UV light with the phenolic hydroxy group, it is expected that the deterioration of the light-shielding film is reduced. Fig. 2 shows the structure of a phenol resin and an example of trapping of a carbon radical and an oxygen radical, which are considered to be main causes of deterioration phenomena, with a phenolic hydroxy group.

The light-shielding film of the present embodiment has a higher flexibility than known light-shielding films, and the mechanical properties of the light-shielding film such as Young's modulus and hardness are not much increased when it is placed in an environment where it is exposed to a large amount of UV light (for example, when subjected to accelerated deterioration test). Accordingly, it is thought that the light-shielding film of the present embodiment can have a higher weather resistance than known light-shielding films, and that poor appearance resulting from nonuniform deterioration can be reduced.

On the other hand, in the known light-shielding film not containing a phenol resin, the mechanical properties such as Young's modulus and hardness are increased when the film is placed in an environment where it is exposed to a large amount of UV light (for example, when subjected to accelerated deterioration test). This is probably because radicals generated by UV light induce a cross-linking reaction or oxidation and thus cause embrittlement of the material.

Thus, the light-shielding film containing a phenol resin is suitable for optical elements produced by a process including heat or steam treatment. This light-shielding film is particularly suitable for the processes in which a relief structure having a pitch or period smaller than or equal to the operating wavelength is formed by fixing a film containing aluminum oxide or aluminum to the optically effective portion of a base member and then immersing the film in hot water.

The advantageous effect of the present embodiment is notable when the optical element including the antireflection film produced by the above-described process is placed under comparatively severe conditions, for example, in an environment exposed to a large amount of UV light (subjected to accelerated degradation test), for a long time. However, the present invention does not limit the use of the light-shielding film.

The optical element of an embodiment of the invention may further include another functional film to impart a desired function. For example, in order to enhance the strength of the films, a hard coat layer may be formed. Also, one or more of layers may be disposed between the base member and the antireflection film and/or light-shielding film. Thus, the performance of the antireflection film can be enhanced, and the adhesion between the base member and other films can be increased.

The optical element of an embodiment of the invention can be applied to the optical system for, for example, camera or film shooting. For example, the optical element of an embodiment of the invention may be used as at least one of the lenses of a camera.

The invention will be further described in detail with reference to Examples below. However, the invention is not limited to the following Examples.

### EXAMPLE 1

Ohara L-LAH 86, which has a Young's modulus of 108 GPa, was used as the base member of the optical element.

In the present Example, a light-shielding coating material was prepared by adding 4 parts by weight of a phenol resin (SUMILITE (registered trademark) PR 53365, produced by Sumitomo Bakelite), 1 part by weight of a commercially available curing agent (RIKACID HNA-100), and 8 parts by weight of a toluene-based diluent to 8 parts by weight of a base material (GT-100A, containing 17% of epoxy resin, and a black dye and other additives, produced by Canon Chemicals Ink.) The light-shielding coating material was used to form a light-shielding film.

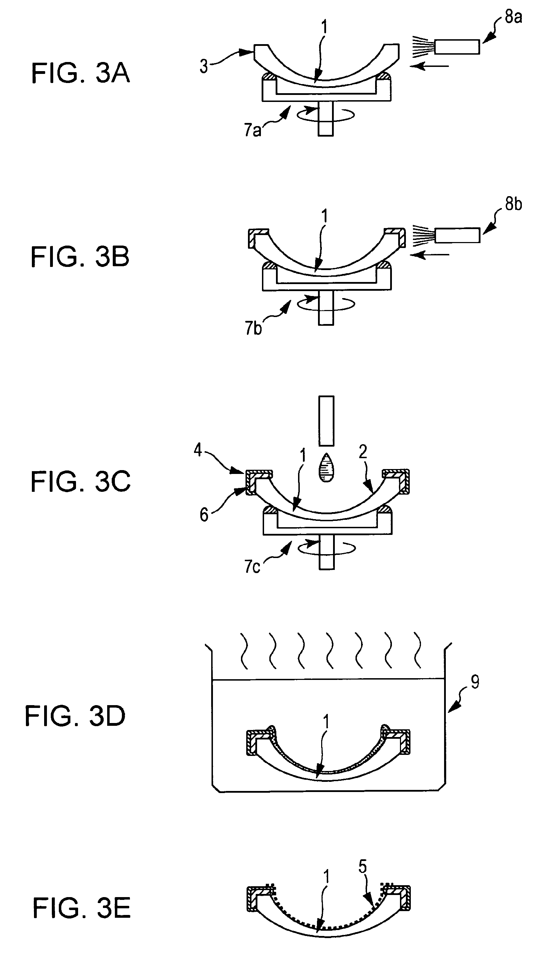

The procedure by which the light-shielding film was formed will be described below with reference to Fig. 3.

The light-shielding coating material was applied to the optically ineffective portion 3 of the base member 1. More specifically, the base member 1 was placed on a turntable 7a, and the light-shielding coating material was applied with a brush 8a while the turntable 7a was slowly rotated. The coating was dried at room temperature for 2 hours and then heated at 210°C for 3 hours, thus forming the light-shielding film. Subsequently, the base member was placed on a turntable 7b, and a coating material (SHONOL (registered trademark) BKM-2620, containing a phenol resin, produced by Showa Denko) was applied to the light-shielding film with a brush 8b while the turntable 7b was slowly rotated. The coating was dried at room temperature for 1 hour and then heated at 150°C for 3 hours, thus forming a protective film 6 on the surface of the light-shielding film 4.

With the lens having the light-shielding film 4 and the protective film 6 placed on a turntable 7c, a coating material containing aluminum oxide or aluminum was dropped around the center of the concave of the optically effective portion 2, and thus spin coating was performed at 3,000 rpm for 30 seconds. Then, heating at 210°C for 3 hours followed the spin coating.

The heat-treated lens was immersed in a hot water bath 9 controlled to a temperature of 65 to 85°C for 30 minutes to form a relief structure containing aluminum oxide or aluminum and having a pitch or period smaller than the operating wavelength on the optically effective portion of the lens.

The resulting lens, shown in Fig. 1, was subjected to accelerated deterioration by being irradiated with a xenon lamp for 200 hours from the side designated by reference numeral 2a, and then the appearance of the lens was observed. As a result, no change was observed in the light-shielding film on the optically ineffective portion in comparison with the state before deterioration test, and the lens was good without problems in terms of functions.

### EXAMPLE 2

A light-shielding film was formed in the same manner as in Example 1 except that 7 parts by weight of a phenol resin (SUMILITE (registered trademark) PR 53365, produced by Sumitomo Bakelite) was added to the base material containing an epoxy resin, a black dye and other additives. Then, the same operation as in Example 1 was performed to complete a lens having a relief structure on the optically effective portion and a light-shielding film on the optically ineffective portion. In this Example, the same base member as in Example 1 was used.

The resulting lens was subjected to accelerated deterioration in the same manner as in Example 1 and the appearance of the lens was observed. As a result, no change was observed in the light-shielding film on the optically ineffective portion in comparison with the state before deterioration test, and the lens was good without problems in terms of functions.

### EXAMPLE 3

A light-shielding film was formed in the same manner as in Example 1 except that 9 parts by weight of a phenol resin (SHONOL (registered trademark) BKM-2620 produced by Showa Denko) and 1 part by weight of a commercially available curing agent (RIKACID MH-700) were added to the base material containing an epoxy resin, a black dye and other additives. Then, the same operation as in Example 1 was performed to complete a lens having a relief structure on the optically effective portion and a light-shielding film on the optically ineffective portion. In this Example, the same base member as in Example 1 was used.

The resulting lens was subjected to accelerated deterioration in the same manner as in Example 1 and the appearance of the lens was observed. As a result, no change was observed in the light-shielding film on the optically ineffective portion in comparison with the state before deterioration test, and the lens was good without problems in terms of functions.

### EXAMPLE 4

A light-shielding film was formed in the same manner as in Example 1 except that 12 parts by weight of a phenol resin (SHONOL (registered trademark) BKM-2620 produced by Showa Denko) and 1 part by weight of a commercially available curing agent (RIKACID MH-700) were added to the base material containing an epoxy resin, a black dye and other additives. Then, the same operation as in Example 1 was performed to complete a lens having a relief structure on the optically effective portion and a light-shielding film on the optically ineffective portion. In this Example, Ohara L-LAH 58, which has a Young's modulus of 127 GPa, was used as the base member.

The resulting lens was subjected to accelerated deterioration in the same manner as in Example 1 and the appearance of lens was observed. As a result, no change was observed in the light-shielding film on the optically ineffective portion in comparison with the state before deterioration test, and the lens was good without problems in terms of functions.

### EXAMPLE 5

A light-shielding film was formed in the same manner as in Example 1 except that 18 parts by weight of a phenol resin (SHONOL (registered trademark) BKM-2620 produced by Showa Denko) and 1 part by weight of a commercially available curing agent (RIKACID MH-700) were added to the base material containing an epoxy resin, a black dye and other additives. Then, the same operation as in Example 1 was performed to complete a lens having a relief structure on the optically effective portion and a light-shielding film on the optically ineffective portion. In this Example, the same base member as in Example 4 was used.

The resulting lens was subjected to accelerated deterioration in the same manner as in Example 1 and the appearance of the lens was observed. As a result, no change was observed in the light-shielding film on the optically ineffective portion in comparison with the state before deterioration test, and the lens was good without problems in terms of functions.

### EXAMPLE 6

A light-shielding film was formed in the same manner as in Example 1 except that 8 parts by weight of a phenol resin (SHONOL (registered trademark) BKM-2620 produced by Showa Denko) was added to the base material containing an epoxy resin, a black dye and other additives without adding a curing agent. Then, the same operation as in Example 1 was performed to complete a lens having a relief structure on the optically effective portion and a light-shielding film on the optically ineffective portion. In this Example, the same base member as in Example 4 was used.

The resulting lens was subjected to accelerated deterioration in the same manner as in Example 1 and the appearance of the lens was observed. As a result, no change was observed in the light-shielding film on the optically ineffective portion in comparison with the state before deterioration test, and the lens was good without problems in terms of functions.

### COMPARATIVE EXAMPLE 1

A light-shielding coating material was prepared by adding 1 part by weight of a commercially available curing agent mainly containing a modified aromatic polyamine and 8 parts by weight of a toluene-based diluent to 8 parts by weight of the same base material as in Example 1, containing a black dye and other additives. The coating material was applied in the same manner as in Example 1. Then, the coating was dried at room temperature for 2 hours and heated at 90°C for 3 hours to complete a light-shielding film. The subsequent operation was performed in the same manner as in Example 1 to complete a lens having a relief structure on the optically effective portion and a light-shielding film on the optically ineffective portion. In this Example, the same base member as in Example 1 was used.

The resulting lens was subjected to accelerated deterioration in the same manner as in Example 1 and the appearance of the lens was observed. As a result, color unevenness was observed in the light-shielding film on the optically ineffective portion in comparison with the state before deterioration test.

### COMPARATIVE EXAMPLE 2

A light-shielding coating material was prepared by adding 1 part by weight of a commercially available acid anhydride curing agent (RIKACID MH-700) and 8 parts by weight of a toluene-based diluent to 8 parts by weight of the same base material as in Example 1, containing a black dye and other additives. The coating material was applied in the same manner as in Example 1. Then, the coating was dried at room temperature for 2 hours and heated at 210°C for 3 hours to complete a light-shielding film. The subsequent operation was performed in the same manner as in Example 1 to complete a lens having a relief structure on the optically effective portion and a light-shielding film on the optically ineffective portion. In this Example, the same base member as in Example 4 was used.

The resulting lens was subjected to accelerated deterioration in the same manner as in Example 1 and the appearance of the lens was observed. As a result, color unevenness was observed in the light-shielding film on the optically ineffective portion in comparison with the state before deterioration test.

### EXAMPLE 7

Ohara L-LAH 86, which has a Young's modulus of 108 GPa, was used as the base member of the optical element.

In this Example, a light-shielding coating material was prepared by adding 8 parts by weight of a phenol resin (SHONOL (registered trademark) BKM-2620 produced by Showa Denko), 1 part by weight of a commercially available curing agent (RIKACID MH-700), and 8 parts by weight of a toluene-based diluent to 8 parts by weight of a base material (GT-100A, containing an epoxy resin, a black dye and other additives, produced by Canon Chemicals Ink.) The light-shielding coating material was used to form a light-shielding film.

As with Example 1, the procedure by which the light-shielding film was formed will be described with reference to Fig. 3.

The light-shielding coating material was applied to the optically ineffective portion 3 of the base member 1. More specifically, the base member 1 was placed on a turntable 7a, and the light-shielding coating material was applied with a brush 8a while the turntable 7a was slowly rotated. The coating was dried at room temperature for 2 hours and then heated at 210°C for 3 hours to complete a light-shielding film 4. With the base member 1 having the light-shielding film 4 placed on a turntable 7b, a coating material (SHONOL (registered trademark) BKM-2620, containing a phenol resin, produced by Showa Denko) was applied to the light-shielding film with a brush 8b while the turntable 7b was slowly rotated. The coating was dried at room temperature for 1 hour and then heated at 150°C for 3 hours, thus forming a protective film 6 on the surface of the light-shielding film 4.

Then, a SiO₂-TiO₂ coating liquid (SiO₂:TiO₂=95:5) was prepared with reference to Japanese Patent No. 4520418 disclosed by Yamada et al. With the base member having the light-shielding film 4 and the protective film 6 placed on a turntable 7c, the SiO₂-TiO₂ coating liquid was dropped around the center of the concave of the optically effective portion 2, and thus spin coating was performed to form a coating film at 3,000 rpm for 20 seconds. After being dried, the coating film was fired at 210°C for 1 hour to form a transparent amorphous SiO₂/TiO₂ film, and thus a lens was produced.

The resulting lens was subjected to accelerated deterioration in the same manner as in Example 1 and the appearance of the lens was observed. As a result, no change was observed in the light-shielding film on the optically ineffective portion in comparison with the state before deterioration test, and the lens was good without problems in terms of functions.

### COMPARATIVE EXAMPLE 3

A light-shielding coating material was prepared by adding 1 part by weight of a commercially available curing agent mainly containing a modified aromatic polyamine and 8 parts by weight of a toluene-based diluent to 8 parts by weight of the same base material as in Example 7, containing a black dye and other additives. The coating material was applied in the same manner as in Example 7. Then, the coating was dried at room temperature for 2 hours and heated at 90°C for 3 hours to complete a light-shielding film 4. The subsequent operation was performed in the same manner as in Example 7 to complete a lens.

The resulting lens was subjected to accelerated deterioration in the same manner as in Example 1 and the appearance of the lens was observed. As a result, color unevenness was observed in the light-shielding film on the optically ineffective portion in comparison with the state before deterioration test.

### EXAMPLE 8

Ohara L-LAH 86, which has a Young's modulus of 108 GPa, was used as the base member.

In this Example, a light-shielding coating material was prepared by adding 8 parts by weight of a phenol resin (SHONOL (registered trademark) BKM-2620 produced by Showa Denko), 1 part by weight of a commercially available curing agent (RIKACID MH-700), and 8 parts by weight of a toluene-based diluent to 8 parts by weight of a base material (GT-100A, containing an epoxy resin, a black dye and other additives, produced by Canon Chemicals Ink.) The light-shielding coating material was used to form a light-shielding film.

As with Example 1, the procedure by which the light-shielding film was formed will be described with reference to Fig. 3.

The light-shielding coating material was applied to the optically ineffective portion 3 of the base member 1. More specifically, the base member 1 was placed on a turntable 7a, and the light-shielding coating material was applied with a brush 8a while the turntable 7a was slowly rotated. The coating was dried at room temperature for 2 hour and then heated at 210°C for 3 hours to complete a light-shielding film 4. With the base member having the light-shielding film placed on a turntable 7b, a coating material (SHONOL (registered trademark) BKM-2620, containing a phenol resin, produced by Showa Denko) was applied to the light-shielding film with a brush 8b while the turntable 7b was slowly rotated. The coating was dried at room temperature for 1 hour and then heated at 150°C for 3 hours, thus forming a protective film 6 on the surface of the light-shielding film 4.

With the base member having the light-shielding film 4 and the protective film_6 placed on a turntable 7c, an appropriate amount of a polyimide solution (polyimide expressed by chemical formula (1):cyclohexanone = 2:98, on a weight basis) was dropped around the center of the concave of the optically effective portion 2, and spin coating was performed at 3,000 rpm for about 20 seconds. A lens was thus completed.

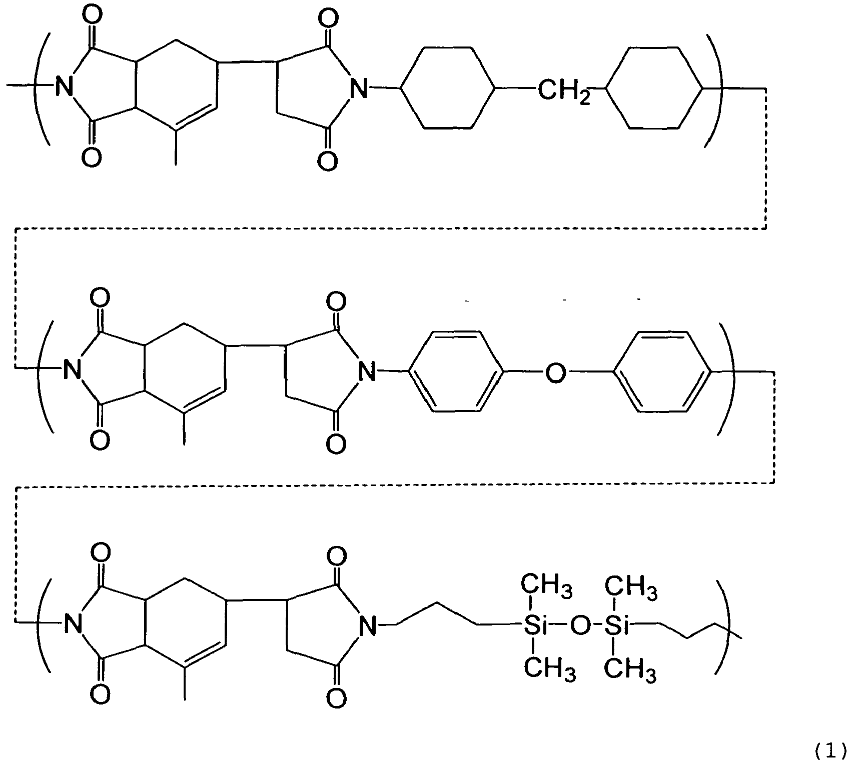

The resulting lens was subjected to accelerated deterioration in the same manner as in Example 1 and the appearance of the lens was observed. As a result, no change was observed in the light-shielding film on the optically ineffective portion in comparison with the state before deterioration test, and the lens was good without problems in terms of functions.

### COMPARATIVE EXAMPLE 4

A light-shielding coating material was prepared by adding 1 part by weight of a commercially available curing agent mainly containing a modified aromatic polyamine and 8 parts by weight of a toluene-based diluent to 8 parts by weight of the same base material as in Example 8, containing a black dye and other additives. The coating material was applied in the same manner as in Example 8. Then, the coating was dried at room temperature for 2 hours and heated at 90°C for 3 hours to complete a light-shielding film. The subsequent operation was performed in the same manner as in Example 8 to complete a lens.

The resulting lens was subjected to accelerated deterioration in the same manner as in Example 1 and the appearance of the lens was observed. As a result, color unevenness was observed in the light-shielding film on the optically ineffective portion in comparison with the state before deterioration test.

### EXAMPLES 9 to 12

Lenses were produced in the same manner as in Example 1 except that different base members were used as shown in Table 1. Then, accelerated deterioration was applied in the same manner as in Example 1, and the appearance of the resulting lens was observed.

### COMPARATIVE EXAMPLES 5 to 8

Lenses were produced in the same manner as in Comparative Example 1 except that different base members were used as shown in Table 1. Then, accelerated deterioration was applied in the same manner as in the Examples, and the appearance of the resulting lens was observed.

### REFERENCE EXAMPLE

A lens was produced in the same manner as in Comparative Example 2 except that the optically effective portion was not provided with an antireflection film. In this reference Example, the same base member as in Comparative Example 8 was used. Then, accelerated deterioration was applied in the same manner as in the Examples, and the appearance of the resulting lens was observed.

The results of appearance observation after accelerated deterioration of Examples 1 to 12, Comparative Examples 1 to 8 and Reference Example were shown in the Table together.

**Table**

| | Base member | Base member Young's modulus (GPa) | Appearance |
|---|---|---|---|
| Example 1 | S-LAH86 | 108 | Good |
| Example 2 | S-LAH86 | 108 | Good |
| Example 3 | S-LAH86 | 108 | Good |
| Example 4 | S-LAH58 | 127 | Good |
| Example 5 | S-LAH58 | 127 | Good |
| Example 6 | S-LAH58 | 127 | Good |
| Example 7 | L-LAH86 | 108 | Good |
| Example 8 | L-LAH86 | 108 | Good |
| Example 9 | S-LAM58 | 93 | Good |
| Example 10 | S-LAM51 | 100 | Good |
| Example 11 | S-LAL14 | 112 | Good |
| Example 12 | S-LAL-18 | 120 | Good |
| Comparative Example 1 | S-LAH86 | 108 | Bad |
| Comparative Example 2 | S-LAH58 | 127 | Bad |
| Comparative Example 3 | L-LAH86 | 108 | Bad |
| Comparative Example 4 | L-LAH86 | 108 | Bad |
| Comparative Example 5 | S-LAM58 | 93 | Bad |
| Comparative Example 6 | S-LAM51 | 100 | Bad |
| Comparative Example 7 | S-LAL 14 | 112 | Bad |
| Comparative Example 8 | S-LAL-18 | 120 | Bad |
| Reference Example | S-LAL-18 | 120 | Good |

Good in appearance: Color unevenness was not observed in the shielding film.
Bad in appearance: Color unevenness was observed in the shielding film.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures and functions.

## Claims

1. An optical element comprising:
a base member (1) having an optically effective portion (2) and an optically ineffective portion (3); and
a light-shielding film (4) disposed on the entire or part of the optically ineffective portion, the light-shielding film containing a cured mixture of an epoxy resin and a phenol resin.

2. The optical element according to Claim 1, wherein the phenol resin is a resole resin.

3. The optical element according to Claim 1 or Claim 2, wherein the cured mixture contains an alicyclic acid anhydride as a curing agent.

4. The optical element according to any one of Claims 1 to 3, further comprising an antireflection film (5) on a surface of the optically effective portion and part of the surface of the light-shielding film.

5. The optical element according to Claim 4, wherein the antireflection film has been formed by a liquid-phase process.

6. The optical element according to Claim 4 or Claim 5, wherein the antireflection film has a relief structure made of crystals mainly of at least one of aluminum oxide, aluminum hydroxide, and hydrates thereof.

7. The optical element according to any one of Claims 4 to 6, wherein the antireflection film has a nano-structure made of a material, having an apparent refractive index lower than the intrinsic refractive index of the material of the nano-structure, and the apparent refractive index is varied in a thickness direction of the antireflection film.

8. The optical element according to any one of Claims 1 to 7, wherein the base member has a Young's modulus in the range of 90 to 130 GPa.

9. The optical element according to any one of Claims 1 to 8, wherein the light-shielding film is covered with a protective film.

10. A method for manufacturing an optical element having an optically effective portion (2) and an optically ineffective portion (3), the method comprising:
forming a light-shielding film (4) on the entire or part of the optically ineffective portion by applying a coating material containing an epoxy resin and a phenol resin; and
forming an antireflection film (5) on a surface of the optically effective portion by a liquid-phase process after the forming of the light-shielding film.

11. The method according to Claim 10, where the forming of the antireflection film includes forming an aluminum oxide film, and forming a relief structure of crystals mainly of at least one of aluminum oxide, aluminum hydroxide, and hydrates thereof at the surface of the aluminum oxide film by bringing the aluminum oxide film into contact with hot water.

12. The method according to Claim 10 or Claim 11, further comprising forming a protective film on the surface of the light-shielding film before the forming of the antireflection film.

13. A light-shielding coating material containing a light-absorbing material, an epoxy resin, a phenol resin, and a curing agent.

14. The light-shielding coating material according to Claim 13, wherein the curing agent is an alicyclic acid anhydride.

15. The light-shielding coating material according to Claim 14, wherein the alicyclic acid anhydride includes methylhexahydrophthalic anhydride or methyl hexahydrophthalic anhydride.
